(19) Europäisches Patentamt
European Patent Office
Office européen des brevets

(11) Numéro de publication : **0 622 020 A1**

(12) **DEMANDE DE BREVET EUROPEEN**

(21) Numéro de dépôt : **94420127.6**

(51) Int. Cl.$^5$ : **A01N 43/653**

(22) Date de dépôt : **22.04.94**

(30) Priorité : **27.04.93 FR 9305193**

(43) Date de publication de la demande : **02.11.94 Bulletin 94/44**

(84) Etats contractants désignés : **AT BE CH DE DK ES FR GB GR IE IT LI LU NL PT SE**

(71) Demandeur : **RHONE-POULENC AGROCHIMIE**
**14-20, rue Pierre Baizet**
**F-69009 Lyon (FR)**

(72) Inventeur : **Gatineau, Francis**
**139, allée du Mathias**
**F-69670 Limonest (FR)**
Inventeur : **Gouot, Jean-Marie**
**24 allée des Eglantiers**
**F-69450 St Cyr Au Montd'Or (FR)**
Inventeur : **Leroux, Bernard**
**13 Allée Vaubecour**
**F-69380 Lozanne Chazay (FR)**

(54) **Procédé pour améliorer la vigueur et/ou la santé des végétaux tels que les céréales par action d'un dérivé de type triazole.**

(57) Procédé pour améliorer la santé et la vigueur des plantes caractérisé en ce qu'on traite les graines avant semis par un triazole de formule (I)

Les produits de multiplication des végétaux revêtus de la composition selon l'invention et cette composition.

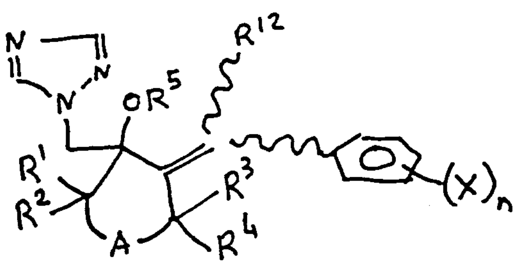

(I)

EP 0 622 020 A1

Jouve, 18, rue Saint-Denis, 75001 PARIS

La présente invention concerne un procédé pour améliorer la vigueur des végétaux indépendemment des maladies dont ils peuvent être atteints.

Dans la demande de brevet européen 378953, on a décrit le traitement, à titre curatif ou préventif, des végétaux contre les maladies fongiques par application audit produit de multiplication d'une matière active à base de certains triazoles.

Dans la demande de brevet européen 467791, on a décrit le traitement, à titre curatif ou préventif, des produits de multiplication des végétaux et des végétaux en résultant contre les maladies fongiques par application audit produit de multiplication d'une composition fongicide contenant le 2-(4-chloro-benzylidène)-5,5-dimethyl-1-(1H-1,2,4-triazol-1-ylméthyl)-1-cyclopentanol, un support inerte convenable en agriculture et éventuellement un tensio actif convenable en agriculture.

Comme déjà indiqué, la présente invention concerne plus particulièrement un procédé ayant pour but d'améliorer la vigueur et/ou la santé des végétaux, spécialement des céréales, indépendemment des maladies dont elles peuvent être atteintes ou dont on peut supposer qu'elles vont être atteintes. Plus exactement, l'invention a pour but un procédé pour:

* améliorer la santé des plantes, et/ou
* contribuer au racourcissement des tiges des plantes, et/ou
* favoriser leur résistance à la verse (même en absence de la maladie du piétin-verse), et/ou
* accroître la teneur en azote absorbé par les plantes à partir du sol, et/ou
* diminuer la quantité d'azote qu'il est nécessaire d'apporter à la culture sous forme d'engrais ou de fumure.

L'invention concerne encore une composition agrochimique destinée à améliorer la vigueur et la santé des plantes, spécialement des céréales, indépendemment des maladies dont elles peuvent être atteintes ou dont on peut supposer qu'elles vont être atteintes, selon un ou plusieurs aspects des buts précités. Autrement dit, la présente invention concerne des compositions agrochimiques destinées à:

* améliorer la santé des plantes, et/ou
* contribuer au racourcissement des tiges des plantes, et/ou
* favoriser leur résistance à la verse (même en absence de la maladie du piétin-verse, et/ou
* accroître la teneur en azote absorbé par les plantes à partir du sol, et/ou
* diminuer la quantité d'azote qu'il est nécessaire d'apporter à la culture sous forme d'engrais ou de fumure.

L'invention concerne enfin un produit de multiplication destiné à donner naissance à des plantes, spécialement des céréales, ayant une vigueur et une santé améliorée, indépendemment des maladies dont elles peuvent être atteintes ou dont on peut supposer qu'elles vont être atteintes, ces produits de multiplication étant caractérisés en ce qu'ils sont capables de donner naissance à des plantes :

* ayant une santé améliorée, et/ou
* ayant une tige raccourcie dans certaine conditions, et/ou
* ayant une résistance à la verse améliorée (même en absence de la maladie du piétin-verse, et/ou
* ayant une teneur accrue en azote absorbé par les plantes à partir du sol, et/ou
* requérant une moindre quantité d'azote qu'il est nécessaire d'apporter à la culture sous forme d'engrais ou de fumure.

Il a été trouvé que ces buts pouvaient être atteints grâce au traitement selon l'invention. Ce traitement est un traitement caractérisé en ce qu'il a les buts précités et qu'il consiste à traiter des graines ou semences, avant semis, avec une quantité efficace de triazole de formule (I) ci-dessous :

(I)

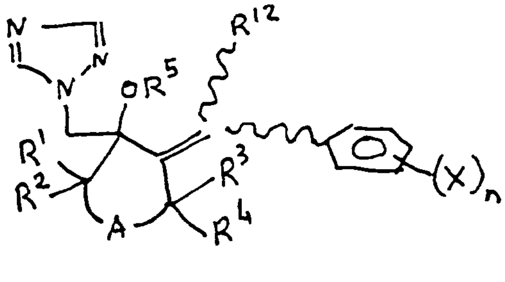

.

dans laquelle

A est $-CR_6R_7-$ ou $-CR_6R_7-CR_8R_9-$ ou $-CR_6R_7-CR_8R_9\ CR_{10}R_{11}-$

X est un atome d'halogène, de préférence le fluor, le brome, le chlore, ou un groupe cyano ou

nitro, ou un groupe $C_1$-$C_4$ alkyle ou $C_1$-$C_4$ alkoxy éventuellement halogéné,

n est un nombre entier positif ou nul, inférieur à 6, les groupements X pouvant être identiques ou différents lorsque n est plus grand que 1,

$R_1$, $R_2$, identiques ou différents, représentent l'atome d'hydrogène ou un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou poly halo $C_1$-$C_4$ alkoxy, $C_2$-$C_4$ alcényle, $C_2$-$C_4$ alcynyle, mono ou poly halo $C_2$-$C_4$ alcényle, mono ou poly halo $C_2$-$C_4$ alcynyle,) $C_1$-$C_4$ alkoxy, éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle) les radicaux $C_3$-$C_7$ cycloalkyle , $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$

alkoxy et les radicaux mono ou polyhalo $C_1$-$C_4$ alkoxy), $R_1$, $R_2$ ensemble peuvent former une chaine $C_2$-$C_5$ hydrocarbonée constituant un cycle avec le carbone auquel $R_1$, $R_2$ sont reliés, cette chaine étant éventuellement substituée comme pour les radicaux $C_6$-$C_{10}$ aryle précédemment cités ou $R_1$, $R_2$ ensemble peuvent former une chaine $C_2$-$C_5$ hydrocarbonée dioxolane avec le carbone auquel $R_1$, $R_2$ sont reliés, cette chaine étant éventuellement substituée comme pour les radicaux $C_6$-$C_{10}$ aryle précédemment cités.

$R_3$, $R_6$ à $R_{11}$, identiques ou différents, représentent l'atome d'hydrogène ou un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy), les radicaux $C_3$-$C_7$ cycloalkyle, $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$ alkoxy et les radicaux mono ou polyhalo $C_1$-$C_4$ alkoxy), ou bien deux radicaux adjacents de la chaîne A forment ensemble, avec les atomes de A auxquels ils sont rattachés, un cycle phényle accolé au cycloalcane,

$R_5$ représente l'atome d'hydrogène, un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle,) les radicaux $C_3$-$C_7$ cycloalkyle, $C_6$-$C_{10}$ aryle (notamment phényle), $C_7$-$C_{11}$ alkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$

alkoxy et les radicaux mono ou polyhalo $C_1$-$C_4$ alkoxy), ou $R_6$ représente un groupe C(=O)-$R_{13}$, $R_{13}$ représentant un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$- $C_4$ alcynyle,) les radicaux $C_3$-$C_7$ cycloalkyle , $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$ alkoxy et les radicaux mono ou polyhalo $C_1$-$C_4$ alkoxy), un radical $C_2$-$C_4$ alcényle, $C_2$-$C_4$ alcynyle, mono ou polyhalo $C_2$-$C_4$ alcényle, mono ou polyhalo $C_2$-$C_4$ alcynyle,

$R_{12}$ a l'une des significations de $R_5$, à l'exception de C(=O)-$R_{13}$,

$R_4$ représente l'atome d'hydrogène, un atome d'halogène, notamment un atome de chlore ou de brome, un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle,) les radicaux $C_3$-$C_7$ cycloalkyle, $C_6$- $C_{10}$ aryle (notamment phényle), $C_7$-$C_{11}$ alkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$ alkoxy et les radicaux mono ou polyhalo $C_1$-$C_4$ alkoxy).

L'invention concerne également l'usage des formes salifiées des composés de formule (I). Les formes salifiées sont les formes acceptables en agriculture parmi lesquelles on peut citer: les chlorhydrate, sulfate, oxalate, nitrate ou arylsulfonate ainsi que les complexes d'addition de ces composés avec des sels métalliques, et notamment des sels de fer, chrome, cuivre, manganèse, zinc, cobalt, étain, magnésium et aluminium.

Au sens du présent texte, on entend que lorsque aucune précision n'est donnée les radicaux concernés peuvent être ramifiés ou linéaires. Le terme éventuellement halogéné signifie éventuellement mono ou poly

halogéné.

Les composés de formule I peuvent exister sous une ou plusieurs formes d'isomères selon le nombre de centres asymétriques de la molécule. L'invention concerne donc l'usage de tous les isomères optiques que leurs mélanges racémiques et les diastéréoisomères correspondants. La séparation des diastéréoisomères et/ou des isomères optiques peut s'effectuer selon les méthodes connues en soi.

Dans la formule (I) le symbole 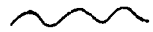 signifie que la stéréochimie de la double liaison peut être indifféremment E ou Z ou un mélange des deux. Compte tenu des contraintes stériques la forme majoritaire sera la forme où $R_{12}$ est en position E par rapport à $R_3$, $R_4$. La partie E est pratiquement l'unique forme obtenue lorsque $R_{12}$ est H.

Parmi les composés préférés utilisés dans l'invention, on met en oeuvre les composés dans la formule desquels une ou plusieurs des conditions suivantes sont respectées:

* n = 1 ou 2, et X est un atome d'halogène placé en para lorsque n = 1 et méta para ou ortho para lorsque n = 2, et/ou
* n = 1 et X est placé en para, et/ou
* X est l'atome de chlore, et/ou
* $R_3 = R_6 = R_8 = R_{10}$ = atome d'hydrogène, et/ou alkyle, et/ou
* $R_4 = R_7 = R_9 = R_{11}$ = atome d'hydrogène ou un radical $C_1$-$C_4$ alkyle, et/ou
* $R_1$ et $R_2$ sont choisis parmi les radicaux méthyle, éthyle, ou un atome d'hydrogène, et/ou
* $R_8$ est l'atome d'hydrogène ou C1-C4 alkyle, très avantageusement $R_8$ est l'atome d'hydrogène, et/ou
* $R_{12}$ est l'atome d'hydrogène, et/ou
* A est $CR_6R_7$ ou $-CR_6R_7CR_8R_9$, et/ou
* A est $CR_6R_7$; $R_1$, $R_2$ sont choisis parmi les radicaux méthyle ou éthyle; $R_3$, $R_5$ à $R_7$, $R_{12}$ sont l'atome d'hydrogène; $R_4$ est méthyle, éthyle, n-propyle, i-propyle, ou l'atome d'hydrogène, et/ou
* A est $CR_8R_7$, $CR_8R_9$; $R_1$, $R_2$ sont choisis parmi les radicaux méthyle, éthyle, ou l'atome d'hydrogène; $R_3$, $R_5$ à $R_9$, $R_{12}$ sont l'atome d'hydrogène; $R_4$ est méthyle, éthyle, n-propyle, i-propyle, ou l'atome d'hydrogène.

On préfère les composés suivants :

* 2-(4-chlorobenzylidène)-5-méthyl 5-éthyl 1-(1H-1,2,4-triazol-1-ylméthyl)-1-cyclopentanol
* 2-(4-chlorobenzylidène)-6-méthyl 1-(1H-1,2,4-triazol-1-ylméthyl)-1-cyclohexanol
* 2-(4-chlorobenzylidène)-6,6-diméthyl 1-(1H-1,2,4-triazol-1-yl-méthyl)-1-cyclohexanol.
* 2-(4-chlorobenzylidène)-1-(1H-1,2,4-triazol-1-ylméthyl)-1-cyclohexanol, et/ou
  et plus spécialement le composé 2-(4-chloro-benzylidène)-5,5-diméthyl-1-(1H-1,2,4-triazol-1-ylméthyl)-1-cyclopentanol.

Par le terme "produit de multiplication", on entend désigner toutes les parties génératives de la plante qu'on peut utiliser pour la multiplication de celle-ci. On citera par exemple les graines (semences au sens étroit), les racines, les fruits, les tubercules, les bulbes, les rhizomes, les parties de plantes. On mentionnera également les plantes germées et les jeunes plants qui doivent être transplantés après germination ou après la sortie de terre. Ces jeunes plants peuvent être protégés avant la transplantation par un traitement total ou partiel par immersion.

On préferera les graines pour les cultures autres que la pomme de terre. Parmi les produits de multiplication convenant pour le procédé de traitement selon l'invention on préferera les :

* graines de dicotylédones : pois, concombre, melon, soja, coton, tournesol, colza, haricot, lin, betterave
* graines de monocotylédones : céréales (blé à l'exception de la variété talent avant le début du tallage, orge, seigle, avoine), maïs, riz
* ou les tubercules de pomme de terre.

De préférence les graines seront revêtues de 0,1 à 500 g de matière active par quintal de graine, de préférence 1 à 400 g par quintal.

De préférence, dans le cas des tubercules, celles-ci sont revêtues d'une quantité de matière active correspondant au trempage dudit produit dans une composition contenant 0,1g/l à 100 g/l de matière active.

L'invention a également pour objet l'utilisation du triazole de formule (I) selon l'invention pour la fabrication de compositions agrochimiques destinées à:

* améliorer la santé des plantes, et/ou
* contribuer au racourcissement des tiges des plantes, et/ou
* favoriser leur résistance à la verse (même en absence de la maladie du piétin-verse), et/ou
* accroître la teneur en azote absorbé par les plantes à partir du sol, et/ou
* diminuer la quantité d'azote qu'il est nécessaire d'apporter à la culture sous forme d'engrais ou de fumure.

L'invention a encore pour objet l'utilisation du triazole de formule (I) selon l'invention pour l'obtention de produits de multiplication des plantes capables de donner naissance à des plantes :

* ayant une santé améliorée, et/ou
* ayant une tige raccourcie dans certaine conditions, et/ou
* ayant une résistance à la verse améliorée (même en absence de la maladie du piétin-verse, et/ou
* ayant une teneur accrue en azote absorbé par les plantes à partir du sol, et/ou
* requérant une moindre quantité d'azote qu'il est nécessaire d'apporter à la culture sous forme d'engrais ou de fumure

Les compositions selon l'invention contiennent habituellement entre 0,5 et 95 % de matière active. Le complément à 100 % est constitué par un support, et éventuellement des additifs divers tels que précisés ci-après.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est souvent requise parce que la matière active et/ou le support inerte ne sont pas solubles dans l'eau et que l'agent vecteur de l'application est l'eau.

Ces composition peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, des pigments, des colorants, des polymères.

Plus généralement, les compositions selon l'invention peuvent être associées à tous les additifs solides ou liquides correspondant aux techniques habituelles de la mise en formulation pour application du traitement de semences notamment.

On notera à ce propos que dans le vocabulaire des hommes de métier, le terme traitement de semences se rapporte en fait au traitement des graines.

Les techniques d'application sont bien connues de l'homme de métier et elles peuvent être utilisées sans inconvénient dans le cadre de la présente invention.

On pourra citer par exemple le pelliculage ou l'enrobage.

Parmi les compositions, on peut citer de manière générale les compositions solides ou liquides.

Comme formes de compositions solides, on peut citer les poudres pour poudrage ou dispersion (à teneur en composé de formule (I) pouvant aller jusqu'à 100 %) et les granulés, notamment ceux obtenus par extrusion, par compactage, par imprégnation d'un support granulé, par granulation à partir d'une poudre (la teneur en composé de formule (I) dans ces granulés étant entre 1 et 80 % pour ces derniers cas).

Les compositions peuvent encore être utilisés sous forme de poudre pour poudrage; on peut ainsi utiliser une composition comprenant 50 g de matière active, 10 g de silice finement divisée, 10 g de pigment organique et 970 g de talc ; on mélange et broie ces constituants et on applique le mélange par poudrage.

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes, les granulés dispersables.

Les concentrés émulsionnables ou solubles comprennent le plus souvent 10 à 80 % de matière active, les émulsions ou solutions prêtes à l'application contenant, quant à elles, 0,01 à 20 % de matière active.

Par exemple, en plus du solvant, les concentrés émulsionnables peuvent contenir quand c'est nécessaire, 2 à 20 % d'additifs appropriés comme les stabilisants, les agents tensio-actifs, les agents de pénétration, les inhibiteurs de corrosion, les colorants ou les adhésifs précedemment cités.

A partir de ces concentrés, on peut obtenir par dilution avec de l'eau des émulsions de toute concentration désirée, qui conviennent particulièrement à l'application sur les semences.

Les suspensions concentrées, également applicables en pulvérisation, sont préparées de manière à obtenir un produit fluide stable ne se déposant pas et elles contiennent habituellement de 1 à 75 % de matière active (de préférence de 2 à 50 %), de 0,5 à 15 % d'agents tensioactifs, de 0,1 à 10 % d'agents thixotropes,

de 0 à 10 % d'additifs appropriés, comme des pigments, des colorants, des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

Les poudres mouillables (ou poudre à pulvériser) sont habituellement préparées de manière qu'elles contiennent 1 à 95 % de matière active (de préférence de 2 à 80 %), et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des pigments, des colorants, des agents de pénétration, des adhésifs, ou des agents antimottants, colorants, etc...

Pour obtenir ces poudres à pulvériser ou poudres mouillables, on mélange intimement la matière active dans des mélangeurs appropriés avec les substances additionnelles et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et ces suspensions sont utilisables très avantageusement en particulier pour l'application sur les semences.

A la place des poudres mouillables, on peut réaliser des pâtes. Les conditions et modalités de réalisation et d'utilisation de ces pâtes sont semblables à celles des poudres mouillables ou poudres à pulvériser.

Les granulés dispersables sont habituellement préparés par agglomération, dans des systèmes de granulation appropriés, des compositions de type poudre mouillable.

Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

Parmi ces compositions, l'homme de métier choisira avantageusement celle ou celles convenant selon les conditions de mise en oeuvre.

L'invention a également pour objet le produit de multiplication des végétaux avec les variantes préférées telles qu'elles ont été définies ci-dessus revêtus et/ou contenant le 2-(4-chloro-benzylidène)-5,5-dimethyl-1-(1H-1,2,4-triazol-1-ylmethyl)-1-cyclopentanol, appelé ci-après triticonazole.

Le terme revêtu de et/ou contenant signifie que la matière active se trouve majoritairement à la surface du produit lors de l'application encore qu'une partie plus ou moins significative puisse y pénétrer selon le mode d'application. Quand ledit produit de multiplication est replanté, il absorbe la matière active.

De préférence le produit de multiplication est choisi parmi les graines choisies avantageusement parmi les graines :

* dicotylédones : pois, concombre, soja, melon, coton, tournesol, colza, haricot, lin, betterave
* monocotylédones : blé tendre d'hiver à l'exception de la variété talent, blé tendre de printemps, blé dur, orge, seigle, avoine, luzerne, maïs, riz.

De préférence les graines sont revêtues à raison de 0,1 à 500 g de matière active par quintal de graine et de préférence 1 à 400 g/quintal.

Une autre variante avantageuse consiste en ce que le produit de multiplication est un tubercule de pomme de terre de préférence revêtu d'une quantité de matière active correspondant au trempage dudit produit dans une solution contenant 0,1 g/l à 100 g/l de matière active.

De préférence la composition accomplissant les buts selon l'invention est caractérisée en ce que les produits de multiplication sont des graines choisies parmis les graines de:

* dicotylédones : pois, concombre, soja, melon, coton, tournesol, colza, haricot, lin, betterave
* monocotylédones : blé tendre d'hiver à l'exception du blé variété talent, blé dur, blé tendre de printemps, orge, seigle, maïs, riz.

De préférence la composition accomplissant les buts selon l'invention est caractérisée en ce qu'elle contient 0,5 à 95 % de matière active.

Les exemples suivant, donnés à titre non limitatif, illustrent l'invention et montrent comment elle peut être mise en oeuvre.

EXEMPLE 1

On traite des semences de blé tendre d'hiver à raison de 120 gramme de triticonazole par quintal de semence de blé.

Pour effectuer le traitement, on utilise une suspension concentrée contenant 200 g/l de triticonazole et 84 g/l de répulsif oiseau. Cette suspension est diluée par un même volume d'eau, et ce mélange dilué est pulvérisé sur les semences de blé avant semis.

Le semis est effectué à l'automne (début novembre). Le sol contenait 109 kg/ha d'azote et l'on ajouté, sous forme de fumure, 100 kg/ha (pour moitié en avril lorsque l'épi, avec la tige, mesure un centimètre, et pour l'autre moitié en mai au stade de croissance "2 noeuds").

Les conditions de culture ont été des conditions sans attaque fongique ou sans atteinte fongique, le témoin étant protégé par de la guazatine (80 g/quintal) et par des traitements ultérieurs antifongiques connus pour n'avoir aucun effet du type de ceux observés ci-après avec le triticonazole.

On observe que, à la floraison, la biomasse des parties aériennes des plantes de blé (exprimée en matière sèche) représentent 9820 kg/ha pour les plantes issues de graines traitées au triticonazole, et de 8950 kg/ha pour celles issues de semences n'ayant pas été traitées au triticonazole.

Cet accroissement de la biomasse sous l'effet du triticonazole montre que les plantes sont beaucoup plus vigoureuses, sont en meilleure santé.

Par ailleurs, la teneur en azote de la matière sèche de la biomasse était de 1,7 % pour les plantes issues de semences traitées au triticonazole et de 1,6 % pour les plantes issues de semences non traitées au triticonazole. Ceci montre que le triticonazole rend les plantes mieux capables d'absorber l'azote à partir du sol, et permet donc de diminuer les doses d'azote apporté sous forme d'engrais.

Enfin, lors de la récolte et pour les plantes issues de semences traitées au triticonazole, on a obtenu

* 83,1 quintaux de graines par hectare,
* 150 kg/ha d'azote fourni par les graines
* 14330 kg/ha de matière sèche de biomasse (paille utilisable pour les animaux + grains).

Au contraire, les plantes non issues de semences traitées au triticonazole, on a obtenu

* 80,4 quintaux de graines par hectare,
* 142 kg/ha d'azote fourni par les graines
* 13730 kg/ha de matière sèche de biomasse (paille utilisable pour les animaux + grains).

EXEMPLE 2

On reproduit l'exemple 1 ajoutant 60 kg/ha d'azote sous forme de fumure à chacune des dates suivantes : février (sortie de l'hiver), avril lorsque l'épi, avec la tige, mesure un centimètre, et mai au stade de croissance "2 noeuds").

On observe, à la floraison, une biomasse (matière sèche) de 10610 kg/ha avec une teneur en azote de 1,8 %, au lieu de 10010 kg/ha et 1,7 % pour le témoin issu de plantes non traitées au triticonazole.

A la récolte et pour les plantes issues de semences traitées au triticonazole, on obtient

* 83,3 quintaux de graines par hectare,
* 164 kg/ha d'azote fourni par les graines
* 15200 kg/ha de matière sèche de biomasse (paille + grains)

Pour le témoin issu de plantes non traitées au triticonazole, on obtient

* 74,7 quintaux de graines par hectare,
* 148 kg/ha d'azote fourni par les graines
* 14120 kg/ha de matière sèche de biomasse (paille + grains)

Les effets annoncés et recherchés quant à la vigueur des plantes, leur santé et leur moindre besoin d'azote sont ainsi démontrés.

EXEMPLE 3

On traite des semences de blé tendre d'hiver à raison de 120 gramme de triticonazole par quintal de semence de blé.

Pour effectuer le traitement, on utilise une suspension concentrée contenant 200 g/l de triticonazole et 84 g/l de répulsif oiseau. Cette suspension est diluée par un même volume d'eau, et ce mélange dilué est pulvérisé sur les semences de blé avant semis.

Le semis est effectué à l'automne (début novembre). Le sol contenait 50 kg/ha d'azote et l'on n'a pas ajouté d'azote sous forme de fumure ou engrais.

Les conditions de culture ont été des conditions sans attaque fongique ou sans atteinte fongique, le témoin étant protégé par de l'oxinate de cuivre et par des traitements ultérieurs antifongiques connus pour n'avoir aucun effet du type de ceux observés ci-après avec le triticonazole.

On a mesuré la teneur en azote (en miligramme par pied de plante) pour l'ensemble racines + feuilles au début juillet, c'est-à-dire au début de la maturation du blé (1 mois avant la récolte).

Cette teneur a été de 265 mg par pied, contre 123 mg/pied pour les plantes non issues de graines traitées au triticonazole.

EXEMPLE 4

On a cultivé du blé semé en automne (fin octobre). Une partie des graines avaient été traitées préalablement au triticonazole à raison de 120 gramme par quintal de semence, tandis que l'autre partie servait de témoin non traité au triticonazole.

Une partie des plantes ont été traitées par du cycocel, à raison de 1140 g/ha, dans des conditions normales, c'est-à-dire au stade fin de tallage-début de montaison. Le cycocel ou 3C est connu comme étant un agent de racourcissement des tiges, ce racourcissement étant recherché pour éviter la verse due à des phénomènes atmosphèriques, sans que ce produit ait un effet quelconque sur le piétin-verse. La culture a été effectuée dans des conditions de non attaque/ non atteinte par des maladies fongiques.

On a effectué des relevés de hauteur de plantes au stade de la maturation (fin juin).

Alors que les témoins traités ni au triticonazole ni au cycocel mesuraient 80 cm, les plantes traitées au cycocel mais non issues de graines traitées au triticonazole mesuraient 69 cm, et les plantes traitées au cycocel et issues de graines traitées au triticonazole mesuraient 64 cm.

Cet essai montre donc un net effet synergique du triticonazole sur les traitements ultérieurs au cycocel, ainsi qu'un racourcissement accentué par l'usage du triticonazole conférant à la plante une meilleur tenue vis-à-vis des aggressions extérieures.

EXEMPLE 5

On a cultivé du blé semé en automne (fin octobre). Une partie des graines avaient été traitées préalablement au triticonazole à raison de 120 gramme par quintal de semence, tandis que l'autre partie servait de témoin non traité au triticonazole.

Une partie des plantes ont été traitées par du cycocel, à raison de 1140 g/ha, dans des conditions normales, c'est-à-dire au stade fin de tallage-début de montaison. La culture a été effectuée dans des conditions de non attaque/ non atteinte par des maladies fongiques.

Une partie des plantes ont été traitées par de l'Ethéphon seul, à raison de 240 g/ha, au début du mois de mai. La culture a été effectuée dans des conditions de non attaque/ non atteinte par des maladies fongiques.

Une partie des plantes ont été traitées à la mi-avril par un mélange de 375 g/ha d'Ethephon et de 750 g/ha de cycocel. La culture a été effectuée dans des conditions de non attaque/ non atteinte par des maladies fongiques.

Il y eu de fortes pluies fin avril et du 20 mai au 13 juin. On a mesuré les résultats par le pourcentage de la surface de la culture ayant donné lieu à la verse. Les résultas suivant ont été obtenus.

| Conditions de traitement | % de surface ayant versé |
|---|---|
| Témoin non traité | 75 |
| Plantes issues de graines traitées au triticonazole | 50 |
| Plantes issues de graines traitées au triticonazole et traitées au cycocel | 1 |
| Plantes issues de graines traitées au triticonazole et traitées à l'Ethephon | 9 |
| Plantes issues de graines traitées au triticonazole et traitées à l'Ethephon et au cycocel | 0 |

| | | |
|---|---|---|
| Plantes issues de graines non traitées au trit | conazole | 8 |
| et traitées à l'Ethephon et au cycocel | | |
| Plantes issues de graines non traitées au trit | conazole | 38 |
| et traitées à l'Ethephon seul | | |
| Plantes issues de graines non traitées au trit | conazole | 13 |
| et traitées au cycocel seul | | |

Cet essai montre encore un net effet synergique du triticonazole sur les traitements ultérieurs au cycocel ou à l'Ethephon, ainsi qu'un racourcissement accentué par l'usage du triticonazole conférant à la plante une meilleur tenue vis-à-vis des aggressions extérieures.

## Revendications

**1** Procédé pour améliorer la vigueur et/ou la santé des plantes, notamment des céréales, caractérisé en ce qu'on applique sur la graine, avant semis, une quantité efficace d'un triazole de formule (I),

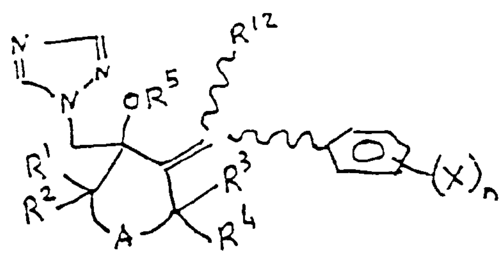

dans laquelle

A est $-CR_6R_7-$ ou $-CR_6R_7-CR_8R_9-$ ou $-CR_6R_7- CR_8R_9-CR_{10}R_{11}-$

X est un atome d'halogène, de préférence le fluor, le brome, le chlore, ou un groupe cyano ou nitro, ou un groupe $C_1$-$C_4$ alkyle ou $C_1$-$C_4$ alkoxy éventuellement halogéné,

n est un nombre entier positif ou nul, inférieur à 6, les groupements X pouvant être identiques ou différents lorsque n est plus grand que 1,

$R_1$, $R_2$, identiques ou différents, représentent l'atome d'hydrogène ou un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou poly halo $C_1$-$C_4$ alkoxy, $C_2$-$C_4$ alcényle, $C_2$-$C_4$ alcynyle, mono ou poly halo $C_2$-$C_4$ alcényle, mono ou poly halo $C_2$-$C_4$ alcynyle,) $C_1$-$C_4$ alkoxy, éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle) les radicaux $C_3$-$C_7$ cycloalkyle , $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$

alkoxy et les radicaux mono ou polyhalo $C_1$-$C_4$ alkoxy), $R_1$, $R_2$ ensemble peuvent former une chaine $C_2$-$C_5$ hydrocarbonée constituant un cycle avec le carbone auquel $R_1$, $R_2$ sont reliés, cette chaine étant éventuellement substituée comme pour les radicaux $C_6$-$C_{10}$ aryle précédemment cités ou $R_1$, $R_2$ ensemble peuvent former une chaine $C_2$-$C_5$ hydrocarbonée dioxolane avec le carbone auquel $R_1$, $R_2$ sont reliés, cette chaine étant éventuellement substituée comme pour les radicaux $C_6$-$C_{10}$ aryle précédemment cités.

$R_3$,

$R_6$ à $R_{11}$, identiques ou différents, représentent l'atome d'hydrogène ou un radical $C_1$-$C_4$ alkyle éventuellement

substitué (par exemple par un ou plusieurs atomes ou radicaux tels que les atomes d'halogènes, les radicaux $C_1$-$C_4$ alkoxy, mono ou polyhalo $C_1$-$C_4$ alkoxy), les radicaux $C_3$-$C_7$ cycloalkyle, $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$ alkoxy et les radicaux mono ou polyhalo $C_1$-$C_4$ alkoxy), ou bien deux radicaux adjacents de la chaîne A forment ensemble, avec les atomes de A auxquels ils sont rattachés, un cycle phényle accolé au cycloalcane,

$R_5$ représente l'atome d'hydrogène, un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle,) les radicaux $C_3$-$C_7$ cycloalkyle, $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$

alkoxy et les radicaux mono ou polyhalo $C_1$-$C_4$ alkoxy), ou $R_5$ représente un groupe C(=O)-$R_{13}$, $R_{13}$ représentant un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle,) les radicaux $C_3$-$C_7$ cycloalkyle , $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$ alkoxy et les radicaux mono ou polyhalo $C_1$-$C_4$ alkoxy), un radical $C_2$-$C_4$ alcényle, $C_2$-$C_4$ alcynyle, mono ou polyhalo $C_2$-$C_4$ alcényle, mono ou polyhalo $C_2$-$C_4$ alcynyle,

$R_{12}$ a l'une des significations de $R_5$, à l'exception de C(=O)-$R_{13}$,

$R_4$ représente l'atome d'hydrogène, un atome d'halogène, notamment un atome de chlore ou de brome, un radical $C_1$-$C_4$ alkyle éventuellement substitué (par exemple par un ou plusieurs atomes ou radicaux tels que les atomes d'halogènes, les radicaux $C_1$-$C_4$ alkoxy, mono ou polyhalo $C_1$-$C_4$ alkoxy, $C_2$-$C_4$ alcényle, $C_2$-$C_4$ alcynyle, mono ou polyhalo $C_2$-$C_4$ alcényle, mono ou polyhalo $C_2$-$C_4$ alcynyle,) les radicaux $C_3$-$C_7$ cycloalkyle, $C_6$-$C_{10}$ aryle (notamment phényle), $C_7$-$C_{11}$ aralkyle (notamment benzyle), ces divers radicaux pouvant être éventuellement substitués (par exemple par un ou plusieurs atomes ou radicaux tels que les atomes d'halogènes, les radicaux $C_1$-$C_4$ alkyle, les radicaux mono ou polyhalo $C_1$-$C_4$ alkyle, les radicaux $C_1$-$C_4$ alkoxy et les radicaux mono ou polyhalo $C_1$-$C_4$ alkoxy), ainsi que les formes salifiées des composés précités.

**2** Procédé selon la revendication 1 caractérisé en ce que en ce que l'application est faite en absence de maladie fongique dont ces graines ou plantes peuvent être atteintes ou dont on peut supposer qu'elles vont être atteintes

**3** Procédé selon la revendication 1 ou 2 caractérisé en ce qu'il a pour but d'accroître la teneur en azote absorbé par les plantes à partir du sol

**4** Procédé selon l'une des revendications 1 à 3 caractérisé en ce qu'il a pour but de diminuer la quantité d'azote qu'il est nécessaire d'apporter à la culture sous forme d'engrais ou de fumure

**5** Procédé selon l'une des revendications 1 à 4 caractérisé en ce qu'il a pour but de contribuer au raccourcissement des tiges des plantes, et/ou favoriser leur résistance à la verse (même en absence de la maladie du piétin-verse)

**6** Procédé selon la revendication 5 caractérisé en ce que les plantes issues de graines traitées avec un triazole sont ultérieurement traitées au cycocel ou à l'Ethéphon

**7** Procédé selon l'une des revendications 1 à 6 caractérisé en ce que le triazole mis en oeuvre a une formule dans laquelle une ou plusieurs des conditions suivantes sont respectées :

* n = 1 ou 2, et X est un atome d'halogène placé en para lorsque n = 1 et méta para ou ortho para lorsque n = 2, et/ou
* n = 1 et X est placé en para, et/ou
* X est l'atome de chlore, et/ou
* $R_3$ = $R_6$ = $R_5$ = $R_{10}$ = atome d'hydrogène, et/ou
* $R_4$ = $R_7$ = $R_9$ = $R_{11}$ = atome d'hydrogène ou un radical $C_1$-$C_4$ alkyle, et/ou
* $R_1$ et $R_2$ sont choisis parmi les radicaux méthyle, éthyle, ou un atome d'hydrogène, et/ou
* $R_5$ est l'atome d'hydrogène ou C1-C4 alkyle, très avantageusement $R_5$ est l'atome d'hydrogène, et/ou
* $R_{12}$ est l'atome d'hydrogène, et/ou
* A est $CR_6R_7$ ou -$CR_6R_7CR_8R_9$, et/ou
* A est $CR_6R_7$; $R_1$, $R_2$ sont choisis parmi les radicaux méthyle ou éthyle; $R_3$, $R_5$ à $R_7$, $R_{12}$ sont l'atome d'hydrogène; $R_4$ est méthyle, éthyle, n-propyle, i-propyle, ou l'atome d'hydrogène, et/ou

* A est $CR_6R_7$, $CR_6R_9$; $R_1$, $R_2$ sont choisis parmi les radicaux méthyle, éthyle, ou l'atome d'hydrogène; $R_3$, $R_5$ à $R_9$, $R_{12}$ sont l'atome d'hydrogène; $R_4$ est méthyle, éthyle, n-propyle, i-propyle, ou l'atome d'hydrogène.

**8** Procédé selon l'une des revendications 1 à 7 caractérisé en ce que le triazole mis en oeuvre est le 2-(4-chloro-benzylidène)-5,5-diméthyl-1-(1H-1,2,4-triazol-1-ylméthyl)-1-cyclopentanol.

**9** Compositions agrochimiques destinées à:

* améliorer la santé des plantes, et/ou
* contribuer au racourcissement des tiges des plantes, et/ou
* favoriser leur résistance à la verse (même en absence de la maladie du piétin-verse, et/ou
* accroître la teneur en azote absorbé par les plantes à partir du sol, et/ou
* diminuer la quantité d'azote qu'il est nécessaire d'apporter à la culture sous forme d'engrais ou de fumure, caractérisées en ce qu'elles contiennent une quantité efficace de triazole tel que défini dans l'une des revendications 1 ou 6 ou 7 ou 8.

**10** Compositions selon la revendication 9 caractérisées en ce qu'elles contiennent 0,5 à 95 % de triazole

**11** Produits de multiplication des plantes caractérisés en ce qu'ils sont capables de donner naissance à des plantes :

* ayant une santé améliorée, et/ou
* ayant une tige raccourcie dans certaine conditions, et/ou
* ayant une résistance à la verse améliorée (même en absence de la maladie du piétin-verse, et/ou
* ayant une teneur accrue en azote absorbé par les plantes à partir du sol, et/ou
* requérant une moindre quantité d'azote qu'il est nécessaire d'apporter à la culture sous forme d'engrais ou de fumure

et qu'ils ont été traités par une quantité efficace de triazole tel que défini dans l'une des revendications 1 ou 6 ou 7 ou 8.

**12** Produits selon la revendication 11 caractérisé en ce que le produit de multiplication est sous forme de grain ou semence

**13** Utilisation d'un triazole de formule (I) telle que définie dans l'une des revendications 1, 7 ou 8 pour la fabrication de compositions agrochimiques destinées à:

* améliorer la santé des plantes, et/ou
* contribuer au racourcissement des tiges des plantes, et/ou
* favoriser leur résistance à la verse (même en absence de la maladie du piétin-verse), et/ou
* accroître la teneur en azote absorbé par les plantes à partir du sol, et/ou
* diminuer la quantité d'azote qu'il est nécessaire d'apporter à la culture sous forme d'engrais ou de fumure.

**14** Utilisation d'un triazole de formule (I) selon la revendication 13, caractérisée en ce que les compositions agrochimiques contiennent de 0,5 à 95 % de triazole.

**15** Utilisation d'un triazole de formule (I) telle que définie dans l'une des revendications 1, 7 ou 8 pour l'obtention de produits de de multiplication des plantes capables de donner naissance à des plantes :

* ayant une santé améliorée, et/ou
* ayant une tige raccourcie dans certaine conditions, et/ou
* ayant une résistance à la verse améliorée (même en absence de la maladie du piétin-verse, et/ou
* ayant une teneur accrue en azote absorbé par les plantes à partir du sol, et/ou
* requérant une moindre quantité d'azote qu'il est nécessaire d'apporter à la culture sous forme d'engrais ou de fumure

**16** Utilisation d'un triazole de formule (I) selon la revendication 15, caractérisée en ce que les produits de multiplication sont sous forme de grain ou semence.

Office européen des brevets

# RAPPORT DE RECHERCHE EUROPEENNE

Numero de la demande
EP 94 42 0127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 433 780 (BASF)<br>* revendications 7,8 *<br>* page 99, ligne 29 - page 100, ligne 31 * | 1-7,9-15 | A01N43/653 |
| X<br><br>D | FR-A-2 662 911 (RHONE POULENC AGROCHEMIE)<br>* revendications 6,7,12 *<br>& EP-A-0 467 791 (ID) | 9-15 | |
| X | EP-A-0 378 953 (RHONE-POULENC AGROCHEMIE)<br>* revendications 18-24 * | 9-15 | |
| A | EP-A-0 267 778 (KUREHA)<br>* revendication 8 *<br>* page 37, ligne 30 - ligne 60 *<br>* exemple 27 * | 1-8 | |

DOMAINES TECHNIQUES RECHERCHES (Int.Cl.5)

A01N

Le présent rapport a été établi pour toutes les revendications

| Lieu de la recherche | Date d'achèvement de la recherche | Examinateur |
|---|---|---|
| LA HAYE | 10 Août 1994 | Decorte, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)